(19) Europäisches Patentamt

European Patent Office

Office européen des brevets

(11) Veröffentlichungsnummer: **0 326 710 B1**

(12) **EUROPÄISCHE PATENTSCHRIFT**

(45) Veröffentlichungstag der Patentschrift: **15.04.92**

(21) Anmeldenummer: **88121753.3**

(22) Anmeldetag: **28.12.88**

(51) Int. Cl.⁵: **B62D 17/00**, B60G 15/06

(54) **Umsetzbares elastisches Stützlager für Schwingungsdämpfer.**

(30) Priorität: **04.02.88 DE 3803289**

(43) Veröffentlichungstag der Anmeldung:
**09.08.89 Patentblatt 89/32**

(45) Bekanntmachung des Hinweises auf die
Patenterteilung:
**15.04.92 Patentblatt 92/16**

(84) Benannte Vertragsstaaten:
**ES FR GB IT SE**

(56) Entgegenhaltungen:
**EP-A- 0 092 066**
**FR-A- 2 452 411**
**US-A- 4 213 631**

**PATENT ABSTRACTS OF JAPAN, Band 9, Nr.
191 (M-402)[1914], 7. August 1985; & JP-A-60
56 620 (SHIYOUWA SEISAKUSHO K.K.)
02-04-1985**

(73) Patentinhaber: **Dr.Ing.h.c. F. Porsche Aktien-
gesellschaft
Porschestrasse 42
W-7000 Stuttgart 40(DE)**

(72) Erfinder: **Hörmandinger, Klaus
Rosenweg 27
W-7251 Weissach-Flacht(DE)**

## Beschreibung

Die Erfindung bezieht sich auf ein elastisches Stützlager für einen Schwingungsdämpfer nach dem Oberbegriff des Anspruchs 1.

Es ist aus der US-PS 42 13 631 ein Mc Pherson-Federbein bekannt, das zwischen einem Radführungsglied und einer aufbauseitigen Lageraufnahme in Querrichtung geneigt ist. Über das Federbein, welches in der Lageraufnahme über Verbindungselemente verstellbar ist, kann die Radstellung, wie z.B. Sturz und Nachlauf verändert werden, indem das Federbein in seiner oberen Lagerung verdreht wird.

Aufgabe der Erfindung ist es, ein Stützlager für einen geneigt angeordneten Schwingungsdämpfer zu schaffen, der für Fahrzeuge mit verschiedenen Radspurweiten verwendbar und in einfacher Weise montierbar ist, ohne daß die geometrischen Daten, wie z.B. Spreizung, Sturz, Vorspur, Federweg sowie die kinematischen Daten, wie z.B. Sturz-, Vorspur-, Nachlaufänderung sich verändern.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen in der Verwendung einer aus Stützlager und Schwingungsdämpfer bestehenden umsetzbaren Einheit für zwei Radspurweiten an Fahrzeugen. Dieses Umsetzen erfolgt durch ein einfaches Verdrehen des Stützlagers um 180° in einer Öffnung der aufbauseitigen Lageraufnahme, wie z.B. einem Federbeindom. Das Lager kann in seiner Kennung unterschiedlich ausgeführt sein.

Da die Lageraufnahme in der Fahrzeugebene schräg nach außen ansteigend verläuft, ergibt sich beim Umsetzen gleichzeitig ein Höhenversatz in der Aufnahme des Schwingungsdämpfers, was eine unerwünschte Verringerung des Dämpferweges und veränderte Radeinstellwerte zur Folge hat.

Damit diese Nachteile vermieden werden und z.B. bei einer breiten Radspurweite gleiche Bedingungen am Rad- bzw. am Schwingungsdämpfer vorliegen, wie bei einer geringeren Radspurweite, ist im Stützlager ein Höhenausgleichelement angeordnet. Dieses besteht aus einem Distanzring, der in montagemäßig einfacher Weise in das innere Aufnahmeelement des Lagers einsetzbar ist. Es ergibt sich hierdurch jeweils für beide Radspurweiten eine gleiche Lage des Schwingungsdämpfers zur aufbauseitigen Lageraufnahme und somit tritt keine Verringerung des Dämpferweges ein. Auch wird durch diese Maßnahme des Höhenausgleichs eine unveränderte Lage der Radeinstellwerte, wie z.B. Sturz, Vor- Nachspur, Spreizung, Nachlauf beibehalten und zusätzliche Ein- bzw. Nachstellungen können somit weitgehend entfallen.

Ein Ausführungsbeispiel der Erfindung ist in der Zeichnung dargestellt und wird im folgenden näher beschrieben.

Es zeigen:

Fig. 1    eine Vorderansicht eines - in bezug auf die Fahrtrichtung - linken Stützlagers mit Schwingungsdämpfer in Einbaulage im zusammengebauten Zustand,

Fig. 1a    eine schematische Darstellung in Draufsicht für eine Radspurweitenverbreiterung- bzw. Verringerung,

Fig. 2    eine Darstellung des Stützlagers im Schnitt für eine kleine Spurweite,

Fig. 3    eine Draufsicht zu Fig. 2 auf das Stützlager mit in strichpunktierten Linien angedeutetem aufbauseitigen Lagerflansch,

Fig. 4    eine Darstellung des Stützlagers im Schnitt für eine große Radspurweite,

Fig. 5    eine Draufsicht zu Fig. 4 auf das Stützlager mit in strichpunktierten Linien angedeutetem aufbauseitigen Lagerflansch,

Fig. 6    eine schematische Darstellung des Stützlagers für eine kleine Spurweite mit eingezeichnetem Höhenversatz des Schwingungsdämpfers bei einer Radspurweitenverbreiterung und

Fig. 7    eine schematische Darstellung des Stützlagers für eine breite Spur mit eingezeichnetem Höhenversatz durch eine Radspurweitenverbreiterung.

Das Stützlager 1 für einen Schwingungsdämpfer 2 umfaßt im wesentlichen einen äußeren Lagerflansch 3 mit dem über ein elastisches Element 4 ein Aufnahmeelement 5 verbunden ist. Im zylindrischen Teil dieses Elements 5 ist ein über einen Distanzring 20 höherversetzbares Kugellager 6 gehalten, in dem eine Kolbenstange 2a des Dämpfers 2 gelagert und über eine Mutter 7 festgesetzt wird.

Der Dämpfer 2 ist exzentrisch zum Lagerflansch 3 angeordnet, welcher aufbauseitig des Fahrzeugs in einer Lageraufnahme 8 abgestützt wird, die in einer in Querrichtung des Fahrzeugs nach außen ansteigenden Schrägebene X-X angeordnet ist. In der Lageraufnahme 8 ist eine sich in Querrichtung des Fahrzeugs erstreckende längliche Öffnung 10 vorgesehen, in der das Stützlager 1 zum Teil nach oben durchragend angeordnet und mit dem Lagerflansch 3 über Schrauben 9 verbunden wird. Vorzugsweise sind die Schrauben 9 in Bohrungen 19 benachbart von Längsseiten 11 und 12 der Öffnung 10 angeordnet.

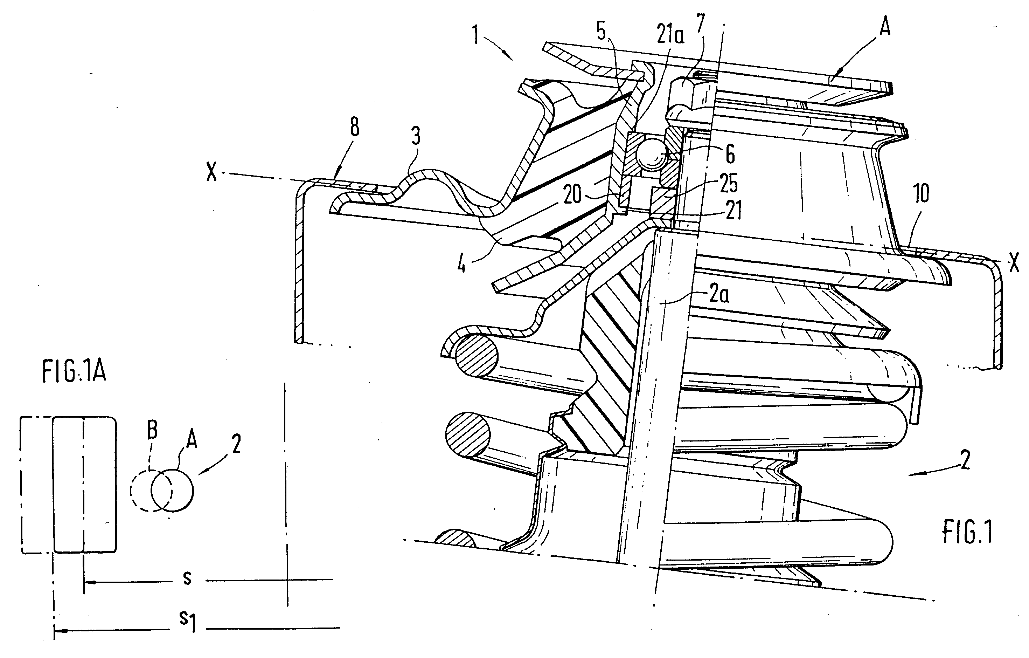

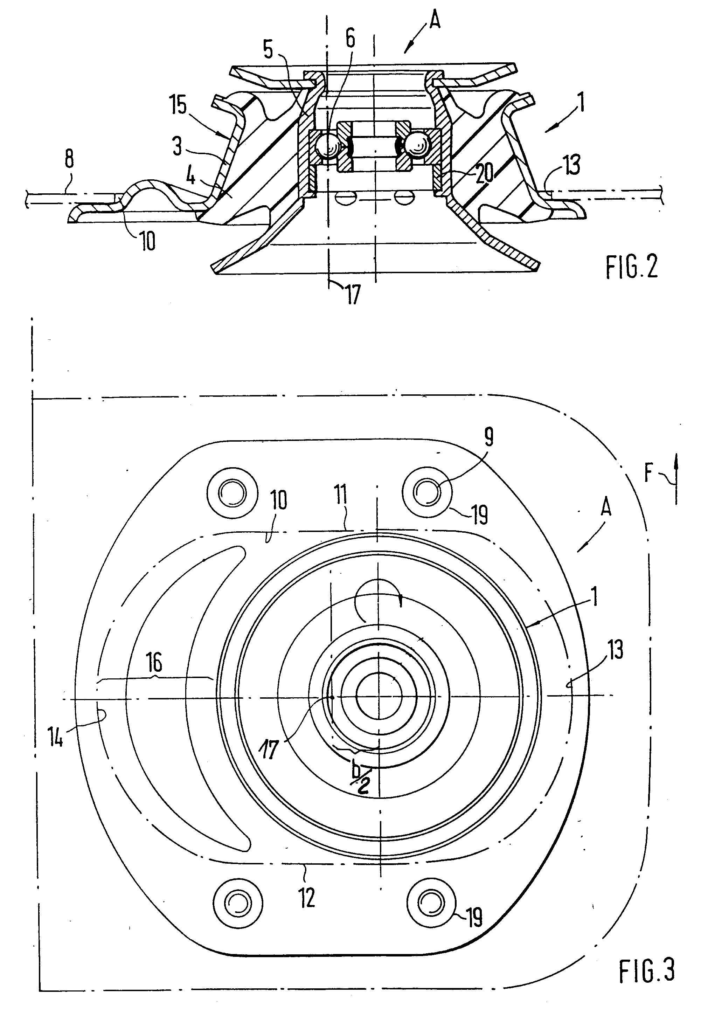

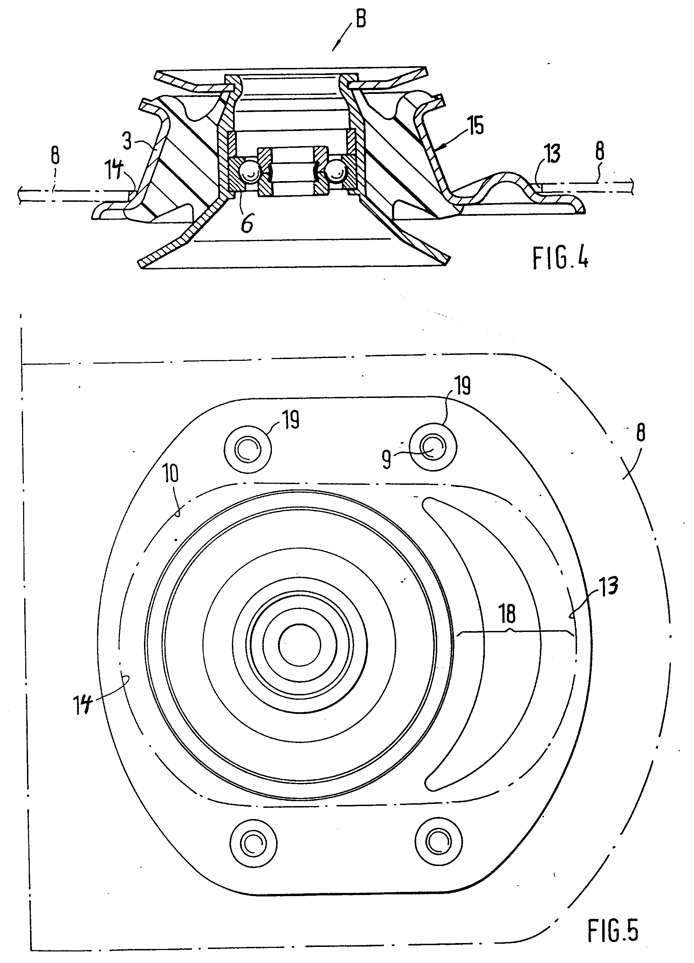

In den Fig. 2 und 3 ist die Anordnung eines - in bezug auf die Fahrtrichtung F - linken Stützlagers 1 ohne Dämpfer in einer ersten Position A für eine kleine Spurweite s dargestellt, wie Fig. 1a schematisch zeigt. Der Lagerflansch 3 ist hierbei in der Öffnung 10 nahe bis zum Innenrand 13 gerückt, wobei vom gegenüberliegenden Außenrand 14 bis zum rohrförmigen Teil 15 des Flansches 3 ein Freiraum 16 verbleibt.

Bei Verwendung des Stützlagers 1 in einem Fahrzeug für eine zweite Position B mit größerer Spurweite $s_1$, wie Fig. 1a zeigt, wird der Lagerflansch 3 um seine Mittelachse 17, wie der Pfeil zeigt, um 180° gedreht. Die Stellung des Stützlagers 1 nach der Drehung ist in den Figuren 4 und 5 dargestellt. Der Flansch 3 ist jetzt bis zum Außenrand 14 gerückt, wobei zwischen dem Innenrand 13 und dem rohrförmigen Teil 15 ein Freiraum 18 verbleibt. Durch das Verdrehen des Stützlagers 1 in der Öffnung 10 der Lageraufnahme 8, bei Verwendung der gleichen Bohrungen 19 in der Lageraufnahme 8 sowie im Lagerflansch 3, erfolgt eine Verlagerung des Schwingungsdämpfers 2 entsprechend der gewünschten Radspurweitenverbreiterung bzw. Verringerung, wie schematisch in Fig. 1 dargestellt ist. Das Maß b der Spurweitenänderung ist in Fig. 3 gezeigt.

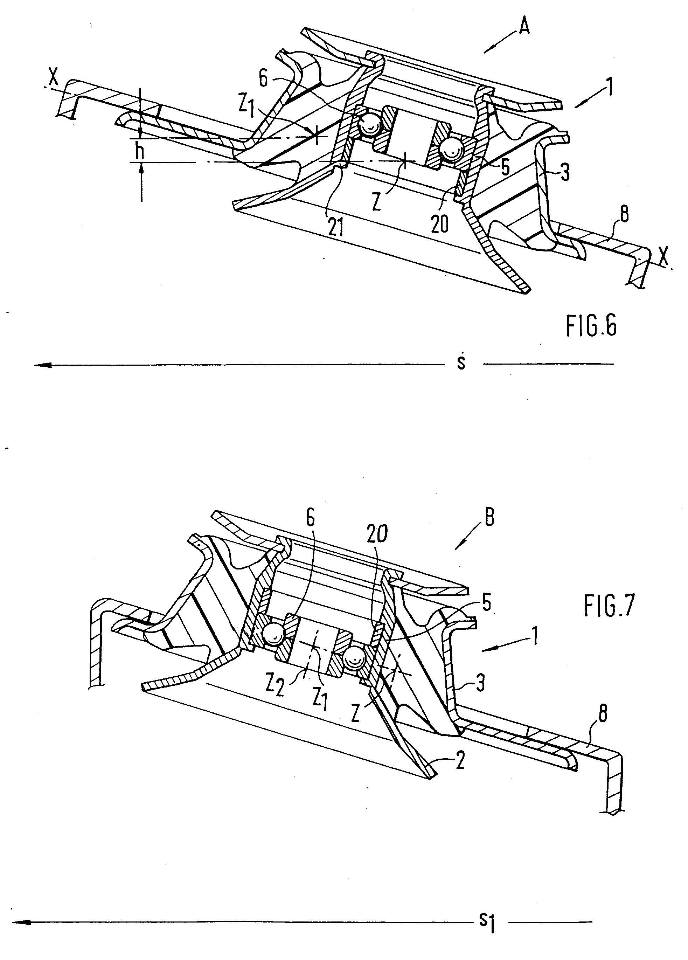

In den Fig. 6 und 7 ist schematisch dargestellt, wie sich ein Lagerpunkt Z der Kolbenstange 2a des Schwingungsdämpfers 2 am Kugellager 6 durch eine Spurweitenveränderung von s auf $s_1$ bzw. von $s_1$ auf s aufgrund des Umsetzens des Lagers 1 um einen Winkel von 180° auf der Schrägebene X-X verändert. In Fig. 6 ist das Stützlager 1 in der Position A für eine kleine Radspurweite s gezeigt. Bei dem Verdrehen des Lagers 1 mit Lagerflansch 3 in die Position B (Fig. 7) mit der Radspurweite $s_1$ (Fig. 1a) wird sich der Lagerpunkt Z in der Höhe um den Betrag h verlagern und die Stellung $Z_1$ einnehmen würden.

Hierdurch wird in nachteiliger Weise die Kinematik der Radaufhängung und eine Verringerung des Dämpferweges bewirkt. Um dieses zu vermeiden, ist bei allen Spurweiten s und $s_1$ ein in der Höhe gleichbleibender Lagerpunkt Z für die Kolbenstange 2a des Schwingungsdämpfers 2 erforderlich. Hierzu ist das Kugellager 6 im rohrförmigen Teil des Aufnahmeelements 5 über den Distanzring 20 gehalten. Dieser ist wie Fig. 6 in der Position A (Spurweite s) zeigt unterhalb des Kugellagers 6 angeordnet und stützt sich über Vorsprünge 21, welche durch Verstemmungen gebildet sind, im Aufnahmeelement 5 ab. Für die Position B (Radspurweite $s_1$) ist der Distanzring 20 oberhalb des Kugellagers 6 angeordnet und stützt sich über weitere Vorsprünge 21a ab. Die Kolbenstange 2a des Schwingungsdämpfers 2 ist unter Zwischenschaltung eines Ausgleichselements 25 direkt am Kugellager 6 gehalten, wodurch der Lagerpunkt Z höhengleich mit dem Lagerpunkt $Z_2$ liegt, wie Fig.

7 zeigt.

## Patentansprüche

1. Elastisches Stützlager für einen in Fahrzeugquer- und längsrichtung geneigt eingebauten Schwingungsdämpfer zur Verwendung in Kraftfahrzeugen unterschiedlicher Radspurweiten, mit einem äußeren, in einer Schrägebene angeordneten Lagerflansch (3), der am Fahrzeugaufbau (Lageraufnahme 8) abgestützt und über Befestigungsmittel gehalten ist und ein unter Zwischenschaltung eines elastischen Elements (4) verbundenes Aufnahmeelement (5) mit einem eingesetzten Kugellager (6) umfasst, **gekennzeichnet durch** folgende Merkmale:

    a) Der Schwingungsdämpfer (2) ist über das Aufnahmeelement (5) exzentrisch im Lagerflansch (3) angeordnet, der eine Mittelachse (17) aufweist.

    b) Der Lagerflansch (3) ist in zwei Positionen (A und B) mit einer kleinen Spurweite ($S_1$) und einer größeren Spurweite ($S_2$)in der Lageraufnahme (8) des Fahrzeugaufbaues festsetzbar, wobei die Exzentrität zwischen der Stoßdämpferachse und der Mittelachse (17) des Lagerflansches (3) einer halben Spurweitenänderung (b/2) entspricht.

    c) In der Lageraufnahme (8) ist der Lagerflansch (3) mit Dämpfer (2) um die Mittelachse (17) durch eine Verdrehung um einen Winkel von etwa 180° zur Einnahme der Positionen (A und B) versetzbar angeordnet.

    d) Über einen im Aufnahmelement (5) unterhalb oder oberhalb des Kugellagers (6) angeordneten Distanzring (20) ist der Dämpfer (2) in den Positionen (A und B) mit einer gleichen Höhenlage zur Lageraufnahme (8) gehalten.

2. Stützlager nach Anspruch 1, **dadurch gekennzeichnet,** daß die aufbauseitige Lageraufnahme (8) ein für beide Positionen (A u.B) des Schwingungsdämpfers (2) ausgebildete und in Querrichtung des Fahrzeugs sich erstreckende längliche Öffnung (10) mit Freiräumen (16, 18) zum Aufnahmeelement (5) aufweist und zu beiden Längsseiten (11, 12) der Öffnung (10) mit Bohrungen im Lagerflansch (3) korrespondierende Bohrungen (19) vorgesehen sind.

3. Stützlager nach den Ansprüchen 1 oder 2, **dadurch gekennzeichnet,** daß das Kugellager (6) mit dem Distanzring (20) zwischen Vorsprüngen (21, 21a) des rohrförmigen Aufnahmeelements (5) abgestützt ist.

**4.** Stützlager nach Anspruch 4, **dadurch gekennzeichnet,** daß in der Position (A) des Schwingungsdämpfers (2) für die kleine Radspurweite (s) zwischen dem Kugellager (6) und dem Lagerpunkt (Z) der Kolbenstange (2a) des Schwingungsdämpfers (2) der Distanzring (20) angeordnet ist.

**5.** Stützlager nach Anspruch 3, **dadurch gekennzeichnet,** daß in der Position (B) des Schwingungsdämpfers (2) für eine große Radspurweite (s₁) der Lagerpunkt (Z₂) der Kolbenstande (2a) unmittelbar am Kugellager (6) angeordnet ist und der Ditanzring (20) oberhalb dieses Kugellagers (6) angeordnet ist.

## Claims

**1.** A resilient support bearing for a vibration damper for use in motor vehicles with different wheel-track widths and mounted at an angle in the transverse and longitudinal direction of the vehicle, having an external bearing flange (3) situated in a oblique plane and supported on the vehicle body (bearing mounting 8) and held by way of fastening means and comprising a receiving member (5) which is connected with the interposition of a resilient member (4) and which has a ball bearing (6) inserted [therein], **characterized by** the following features:

a) the vibration damper (2) is arranged by way of the receiving member (5) eccentrically in the bearing flange (3), which has a median axis (17);

b) the bearing flange (3) can be secured in two positions (A and B) with a small track width ($S_1$) and a larger track width ($S_2$) in the bearing mounting (8) of the vehicle body, the eccentricity between the axis of the shock absorber and the median axis (17) of the bearing flange 3) corresponding to a half track-width change (b/2);

c) in the bearing mounting (8) the bearing flange (3) is arranged so as to be movable with the damper (2) about the median axis (17) by a rotation about an angle of about 180° in order to occupy positions (A and B);

d) the damper (2) is held in positions (A and B) at an equal vertical position with respect to the bearing mounting (8) by way of a spacer ring (20) arranged in the receiving member (5) below or above the ball bearing (6).

**2.** A support bearing according to Claim 1 **characterized in that** the bearing mounting (8) has an elongate opening (10) formed for both positions (A and B) of the vibration damper (2) and extending in the transverse direction of the vehicle and having free spaces (16, 18) towards the receiving member (5), and bores (19) corresponding to bores in the bearing flange (3) are provided on both longitudinal sides (11, 12) of the opening (10).

**3.** A support bearing according to Claim 1 or 2, **characterized in that** the ball bearing (6) is supported with the spacer ring (20) between projections (21, 21a) of the tubular receiving member (5).

**4.** A support bearing according to Claim 4 [*sic*], **characterized in that** in position (A) of the vibration damper (2) for the small wheel-track width (s) the spacer ring (20) is arranged between the ball bearing (6) and the bearing point (Z) of the piston rod (2a)of the vibration damper (2).

**5.** A support bearing according to Claim 3, **characterized in that** in position (B) of the vibration damper (2) for a large wheel-track width ($s_1$) the bearing point ($Z_2$) of the piston rod (2a) is arranged directly on the ball bearing (6) and the spacer ring (20) is arranged above the said ball bearing (6).

## Revendications

**1.** Palier d'appui élastique pour un amortisseur d'oscillations monté incliné dans la direction transversale et la direction longitudinale d'un véhicule, destiné à être utilisé dans des véhicules automobiles dont l'écartement des roues est différent, comportant une bride de palier (3) extérieure, disposée dans un plan incliné, qui prend appui contre la carrosserie de véhicule (logement de palier 8) et qui est maintenue par des moyens de fixation et qui comporte un élément de logement (5) relié, par interposition d'un élément élastique (4), avec un roulement à billes (6) inséré, caractérisé par les caractéristiques suivantes :

a) L'amortisseur d'oscillations (2) est placé excentré, par l'élément de logement (5), dans la bride de palier (3) qui présente un axe médian (17).

b) La bride de palier (3) peut être fixée dans deux positions (A et B) avec un petit écartement des roues ($S_1$) et un grand écartement des roues ($S_2$), dans le logement de palier (8) de la carrosserie du véhicule, l'excentricité entre l'axe du pare-chocs et l'axe médian (17) de la bride de palier (3) correspondant à la moitié d'une variation de l'écartement des roues (b/2).

c) Dans le logement de palier (8), la bride de palier (3) avec l'amortisseur (2) est disposée déplaçable autour de l'axe médian (17) par une rotation d'un angle d'environ 180°, par rapport aux positions (A et B).

d) L'amortisseur (2) est maintenu dans les positions (A et B) à une même hauteur par rapport au logement de palier (8), par l'intermédiaire d'une bague d'écartement (20) placée dans l'élément de logement (5), au-dessous ou au-dessus du roulement à billes (6).

2. Palier d'appui selon la revendication 1, caractérisé en ce que le logement de palier (8) côté carrosserie présente une ouverture (10) allongée, conçue pour les deux positions (A et B) de l'amortisseur d'oscillations (2) et s'étendant dans la direction transversale du véhicule, avec des espaces libres (16, 18) pour l'élément de logement (5) et en ce qu'il est prévu des deux côtés longitudinaux (11, 12) de l'ouverture (10), des trous (19) correspondant à des trous pratiqués dans la bride de palier (3).

3. Palier d'appui selon les revendications 1 ou 2, caractérisé en ce que le roulement à billes (6) est soutenu par la bague d'écartement (20) entre des parties saillantes (21, 21a) de l'élément de logement (5) tubulaire.

4. Palier d'appui selon la revendication 4, caractérisé en ce que dans la position (A) de l'amortisseur d'oscillations (2) pour le petit écartement de roues (s), la bague d'écartement (20) est placée entre le roulement à billes (6) et le point d'appui (Z) de la tige de piston (2a) de l'amortisseur d'oscillations (2).

5. Palier d'appui selon la revendication 3, caractérisé en ce que dans la position (B) de l'amortisseur d'oscillations (2) pour un grand écartement de roues ($s_1$), le point d'appui ($Z_2$) de la tige de piston (2a) se situe directement sur le roulement à billes (6) et la bague d'écartement (20) au-dessus de ce roulement à billes (6).

FIG.1

FIG.1A

FIG.2

FIG.3

FIG.4

FIG.5

FIG.6

FIG.7